# FASCICULE DE BREVET EUROPEEN

(11) **EP 2 431 345 B1**
(45) Date de publication et mention de la délivrance du brevet: **17.04.2013**
(21) Numéro de dépôt: 11181911.6
(22) Date de dépôt: 20.09.2011
(51) Int. Cl.: C04B 41/87, C04B 41/89, A47J 36/04

(54) **Procédé de fabrication d'un article de cuisson alimentaire en céramique et article de cuisson associe**
Herstellungsverfahren für ein Kochgerät aus Keramik, und dazugehöriges Kochgerät
Method for manufacturing a ceramic food-cooking item and associated cooking item

(30) Priorité: 20.09.2010 FR 1057478
(43) Date de publication de la demande: 21.03.2012
(73) Titulaire: Revol Porcelaine S.A., 26240 Saint Uze (FR)
(72) Inventeur: Lacan, Bernard, 07300 ST JEAN DE MUZOLS (FR); Peres, Philippe, 42220 ST JEAN MOLIN MOLETTE (FR); Nuel, Thierry, 26100 ROMANS SUR ISERE (FR)
(74) Mandataire: Chevalier, Renaud Philippe

(56) Documents cités:
- FR-A1- 2 716 099

## Description

La présente invention se rapporte à un procédé de fabrication d'un article de cuisson alimentaire en céramique et à un article de cuisson obtenu par un tel procédé.

Elle se rapporte plus particulièrement à un article de cuisson adapté pour supporter plusieurs sources de chaleur distinctes, dont le four électrique, le four à gaz, le four à micro-ondes, les feux de cuisson à gaz et les plaques de cuisson électrique, vitrocéramique et à induction, et également pour supporter un stockage en congélateur et un lavage en lave-vaisselle.

Pour pouvoir employer un article de cuisson dans un four électrique, à gaz ou à bois, il n'est pas envisageable d'employer un article en matière plastique.

Pour pouvoir employer un article de cuisson dans un four à micro-ondes, il n'est pas envisageable d'employer un article métallique.

Pour pouvoir employer un article de cuisson sur une plaque de cuisson à induction, il n'est pas envisageable d'employer un article réalisé uniquement en verre, en plastique ou en céramique. Par contre, il est connu, notamment du document EP 0 695 282 B1, de déposer sur le fond d'un récipient céramique une couche conductrice d'électricité apte à générer des courants de Foucault.

Pour pouvoir employer un article de cuisson sur un feu de cuisson à gaz ou sur une plaques de cuisson électrique ou vitrocéramique, autrement dit pour pouvoir réaliser la cuisson en mettant l'article directement en contact avec une flamme ou une résistance électrique, il n'est pas envisageable d'employer un article réalisé uniquement en plastique, en céramique classique ou en verre, à l'exception du pyrex.

En outre, les articles de cuisson doivent satisfaire aux différents modes de cuisson offerts par les différentes sources de chaleur, et cela de manière non dégradée.

Pour satisfaire à la cuisson à la fois dans un four à micro-ondes et sur une plaque de cuisson à induction, il est indispensable de rendre compatible la partie métallique apte à générer des courants de Foucault, à un usage dans un four à micro-ondes.

Pour satisfaire à la cuisson à la fois sur un feu de cuisson à gaz et sur une plaque de cuisson à induction, il est indispensable de rendre compatible la partie métallique apte à générer des courants de Foucault à un contact direct avec une flamme, autrement dit de ne pas altérer ou détruire cette partie métallique au contact de la flamme.

Pour permettre à l'article de passer d'un stockage en congélateur, où la température de stockage est sensiblement de l'ordre de - 20°C, à une cuisson sur un feu de cuisson à gaz, où la température de la flamme est supérieure à 500°C, et également pour tolérer un échauffement rapide sur une plaque de cuisson à induction, il est indispensable d'abaisser le coefficient de dilatation thermique de l'article de cuisson.

En outre, un article de cuisson alimentaire doit répondre à certaines exigences alimentaires, dont l'une porte sur la faible porosité de l'article pour limiter au maximum une rétention des liquides alimentaires et/ou de nettoyage à l'intérieur des pores de l'article. Il est de plus indispensable que l'article à vocation alimentaire présente une résistance thermique et mécanique suffisante pour éviter l'apparition de microfissures susceptibles de retenir des liquides alimentaires et/ou de nettoyage.

La présente invention a pour but de proposer un procédé qui permette de fabriquer un article de cuisson qui réponde en tout ou partie à ces exigences et qui permet un usage sur plusieurs sources de chaleur distinctes tout en permettant un stockage en congélateur et une utilisation alimentaire.

A cet effet, elle propose un procédé de fabrication d'un article de cuisson alimentaire en céramique adapté pour supporter plusieurs sources de chaleur distinctes, comprenant les étapes successives suivantes:
a) fourniture d'une pâte céramique comportant du quartz dans un pourcentage compris entre 10 et 25 %, du kaolin dans un pourcentage compris entre 25 et 50 %, du carbonate de magnésium dans un pourcentage compris entre 10 et 25 % et de l'oxyde d'aluminium dans un pourcentage compris entre 10 et 25 % ;
b) préparation d'une barbotine de céramique en délayant la pâte céramique dans une suspension aqueuse ;
c) fourniture d'une poudre d'émail;
d) préparation d'une barbotine d'émail en délayant la poudre d'émail dans une suspension aqueuse;
e) façonnage de la barbotine de céramique pour obtenir une pièce céramique de forme appropriée;
f) émaillage de la pièce céramique consistant à recouvrir ladite pièce céramique d'une couche de barbotine d'émail;
g) cuisson de la pièce céramique émaillée à une température de cuisson comprise entre 1360 °C et 1450 °C, de préférence entre 1385 °C et 1430 °C, pendant une durée comprise entre 2 et 6 heures, de préférence entre 4 et 5 heures, afin d'obtenir un article comportant une âme céramique recouverte d'une couche d'émail, ladite âme céramique présentant une composition minéralogique riche en cordiérite, corindon, quartz, phase vitreuse et mullite, avec un pourcentage de cordiérite compris entre 40 et 60 % et un pourcentage de corindon compris entre 8 et 15%, et dans lequel ledit article présente les caractéristiques intrinsèques suivantes:
   - coefficient de dilatation thermique compris entre 28 et 34 ppm/°C, de préférence égal à 31 ppm/°C;
   - coefficient d'absorption d'eau en volume inférieur à 0,5 %, et de préférence inférieur à 0,2 %; et
   - densité apparente supérieure à 2,0, de préférence supérieure à 2,4.

Ainsi, l'invention propose de réaliser l'article de cuisson en céramique, avec une pâte céramique de départ riche en silicium (les kaolins étant des argiles blanches, friables et réfractaires, composées principalement de kaolinite, soit des silicates d'aluminium), magnésium et oxyde d'aluminium, et d'appliquer à cette pâte céramique une cuisson qui confère à l'article une faible porosité (avec un coefficient d'absorption d'eau en volume inférieur à 0,5 %) qui garantit l'hygiène et le nettoyage de l'article, et un faible coefficient de dilatation thermique (inférieur à 34 ppm/°C) qui permet des usages avec des variations brusques de température, ainsi qu'une densité suffisamment élevée pour garantir un excellent comportement mécanique de l'article.

Ces caractéristiques avantageuses sont obtenues grâce à une température de cuisson (entre 1360°C et 1450 °C) adaptée pour déclencher la combinaison de la cordiérite, et à une durée de cuisson (entre 2 et 6 heures) suffisante pour obtenir la nucléation et la cristallisation de la cordiérite. Pour indication, la cordiérite est une espèce minérale constituée de silicate de magnésium et d'aluminium, de formule générale Al₃Mg₂AlSi₅O₁₈. L'âme céramique correspond bien entendu à la pâte céramique après délayage, façonnage et cuisson.

En outre, la présence massive de cordiérite (environ 40 et 60 %) est associé à un renforçant, à savoir le corindon à hauteur de 8 à 15%. Pour indication, le corindon, ou « alumine alpha », est une espèce minérale composée d'anhydre cristallisée, de formule Al₂O₃, que l'on note aussi α-Al₂O₃. La dureté du corindon est de 9 sur l'échelle de Mohs, ce qui en fait le deuxième minéral le plus dur après le diamant.

La cordiérite présente d'excellentes caractéristiques de résistance thermique, et le corindon présente d'excellentes caractéristiques de résistance mécanique, ce qui fait que leur association contribue fortement aux qualités thermiques et mécaniques de l'article de cuisson obtenu par ce procédé.

En outre, l'âme céramique après cuisson présente un aspect blanc, vitrifié, dense et translucide, qui se rapproche de l'aspect de la porcelaine, et qui permet ainsi d'obtenir au final un article de cuisson présentant une couleur blanche, avec éventuellement une nuance ivoire ou crème satinée suivant l'aspect de l'émail après cuisson, particulièrement appréciée dans le domaine alimentaire.

Selon une caractéristique, le procédé comprend en outre, après l'étape g), une étape h) de dépôt sur le fond de l'article d'une couche conductrice d'électricité apte à générer des courants de Foucault, et dont l'épaisseur est de préférence comprise entre 10 et 25 micromètres.

Cette caractéristique est particulièrement avantageuse pour permettre un usage sur une plaque de cuisson à induction. Le choix d'une couche conductrice d'épaisseur comprise entre 10 et 25 micromètres permet également un usage de l'article dans un four micro-ondes.

De manière avantageuse, l'étape h) de dépôt d'une couche conductrice d'électricité s'effectue par un procédé de dépôt par décalcomanie de ladite couche conductrice d'électricité, au moyen d'un chromo comportant une pellicule métallique, notamment à base d'argent, constitutive de ladite couche conductrice d'électricité.

La pellicule métallique présente avantageusement une épaisseur comprise entre 10 et 25 micromètres, comme expliqué ci-dessus.

Ce procédé de dépôt par décalcomanie est particulièrement avantageux pour contrôler et maitriser les épaisseurs de dépôt, ainsi que pour contrôler la capacité de chauffage par induction de l'article en adaptant le rapport entre la surface active (surface du fond de l'article recouverte par la couche conductrice d'électricité) et la surface neutre (surface du fond de l'article non recouverte par la couche conductrice d'électricité)

Le chromo employé lors de l'étape h) peut comporter une surcouche d'émail fusible destinée à protéger la pellicule métallique du chromo. Cette surcouche d'émail fusible doit subir une cuisson, et dans ce cas le procédé comprend en outre, après l'étape h), une étape i) de cuisson de l'article à une température de cuisson comprise entre 800 °C et 900 °C, de préférence 850 °C, pendant une durée comprise entre 2 heures et 5 heures, de préférence égal à 3 heures.

Après cette étape i) de cuisson supplémentaire, on obtient une surcouche d'émail fusible recuite à environ 850°C, qui est particulièrement avantageuse pour protéger la pellicule métallique, en particulier contre les rayures et les lavages, et également pour éviter de dégrader voire détruire cette pellicule métallique lorsque l'article de cuisson est posé sur une résistance électrique ou sur une flamme de feu de cuisson à gaz.

La surcouche d'émail fusible présente avantageusement une épaisseur comprise entre environ 17 et 23 micromètres.

Dans une réalisation particulière, l'étape f) d'émaillage est réalisée par un procédé de pulvérisation de la barbotine d'émail ou par un procédé de trempage dans la barbotine d'émail.

Avantageusement, l'étape c) consiste à fournir une poudre d'émail présentant une composition minéralogique riche en cordiérite, corindon, quartz et mullite, voisine de la composition minéralogique de l'âme céramique de l'article obtenu lors de l'étape g).

En employant pour l'émail une composition voisine de celle de la pâte céramique après cuisson (en l'occurrence l'âme céramique), on permet ainsi de garantir que la couche d'émail après cuisson présentera les mêmes qualités thermiques et mécaniques que la pâte céramique cuite, notamment en ce qui concerne la faible porosité, le faible coefficient de dilatation thermique et la grande résistance mécanique.

Dans un mode de réalisation particulier, l'étape g) de cuisson de la pièce céramique émaillée s'effectue sous une atmosphère oxydante ou réductrice.

Selon une possibilité de l'invention, l'étape g) de cuisson de la pièce céramique émaillée s'effectue selon un programme de température qui comporte les intervalles successifs suivants:
- intervalle de température comprise entre 300 °C et 600 °C pendant une durée comprise entre 1 et 2 heures;
- intervalle de température comprise entre 900 °C et 1300 °C pendant une durée comprise entre 3 et 5 heures;
- intervalle de température comprise entre 1300 °C et 1360 °C pendant une durée comprise entre 1 et 2 heures;
- intervalle de température comprise entre 1360 °C et 1450 °C pendant une durée comprise entre 2 et 6 heures;
- intervalle de température comprise entre 1200 °C et 1360 °C pendant une durée comprise entre 5 heures et 7 heures ;
- intervalle de température comprise entre 300 °C et 600 °C pendant une durée comprise entre 5 et 7 heures;
- intervalle de température comprise entre 20 °C et 50 °C pendant une durée comprise entre 1 heure et 2 heures.

Un tel programme de température est particulièrement avantageux pour permettre la nucléation et la cristallisation de la cordiérite.

L'invention se rapporte également à un article de cuisson alimentaire en céramique obtenu par le procédé de fabrication conforme à l'invention, dans lequel l'article comporte une âme céramique recouverte d'une couche d'émail, ladite âme céramique présentant une composition minéralogique riche en cordiérite, corindon, quartz, phase vitreuse et mullite, avec un pourcentage de cordiérite compris entre 40 et 60 % et un pourcentage de corindon compris entre 8 et 15%, et dans lequel ledit article présente les caractéristiques intrinsèques suivantes:
- coefficient de dilatation thermique compris entre 28 et 34 ppm/°C, de préférence égal à 31 ppm/°C;
- coefficient d'absorption d'eau en volume inférieur à 0,5 %, et de préférence inférieur à 0,2 %; et
- densité apparente supérieure à 2,0, de préférence supérieure à 2,4.

De préférence, la couche d'émail présente un coefficient de dilatation thermique compris entre 28 et 34 ppm/°C, de préférence égal à 31 ppm/°C.

De manière avantageuse, l'article comporte sur le fond une couche conductrice d'électricité apte à générer des courants de Foucault, et dont l'épaisseur est de préférence comprise entre 10 et 25 micromètres.

D'autres caractéristiques et avantages de la présente invention apparaîtront à la lecture de la description détaillée ci-après, d'un exemple de mise en oeuvre non limitatif, faite en référence notamment aux figures annexées dans lesquelles:
- la figure 1 est une vue en perspective schématique d'un article de cuisson réalisé avec le procédé conforme à l'invention ;
- la figure 2 est une vue en coupe de la zone Il de la figure 1, illustrant les différentes couches de l'article.

L'invention concerne un procédé de fabrication d'un article 1 de cuisson alimentaire en céramique adapté pour supporter plusieurs sources de chaleur distinctes, dont le four électrique, le four à gaz, le four à micro-ondes, les feux de cuisson à gaz et les plaques de cuisson électrique, vitrocéramique et à induction, et également pour supporter un stockage en congélateur et un lavage en lave-vaisselle. On parle alors d'un article 1 de cuisson multi modes car il permet plusieurs modes de cuisson, à savoir les différents modes de cuisson avec les différentes sources de chaleur précitées.

Pour ce faire, le procédé comporte les neuf étapes a) à i) successives suivantes.

La première étape a) est une étape de fourniture d'une pâte céramique comportant du quartz dans un pourcentage compris entre 10 et 25 %, du kaolin dans un pourcentage compris entre 25 et 50 %, du carbonate de magnésium dans un pourcentage compris entre 10 et 25 % et de l'oxyde d'aluminium dans un pourcentage compris entre 10 et 25 %.

Autrement dit, cette pâte céramique comporte a % de quartz, b % de kaolin, c % de carbonate de magnésium et d % d'oxyde d'aluminium, où a est compris entre 10 et 25, b est compris entre 25 et 50, c est compris entre 10 et 25 et d est compris entre 10 et 25, et où a + b+ c + d est égal à 100, voire légèrement inférieur à 100 si la pâte comporte d'autres composés minoritaires ou des impuretés.

Une pâte particulièrement bien adaptée pour la mise en oeuvre du procédé est constituée de la pâte fournie par l'entreprise Imerys sous la référence pâte « flamme Imerys CC 477 B ». Pour la suite de la description, et notamment des caractéristiques de l'article, la pâte céramique est constituée de cette pâte « flamme Imerys CC 477 B ».

La deuxième étape b) est une étape de préparation d'une barbotine de céramique en délayant la pâte céramique dans une suspension aqueuse contenant des électrolytes ou défloculants (tels que des sels de sodium) en suspension dans l'eau.

Cette étape b) peut comprendre les deux étapes successives suivantes:
b.1) délayage de la pâte céramique dans la suspension aqueuse jusqu'à l'obtention d'une pâte liquide dont la densité est comprise entre 1,750 et 1,850 et dont la viscosité est comprise entre 280 et 350 degrés Gallenkamp (viscosité mesurée avec un viscosimètre à fil de torsion du type appareil de Gallenkamp); puis
b.2) travail de la pâte liquide (notamment par filtre-pressage) pendant une durée prédéterminée et sous une pression prédéterminée jusqu'à l'obtention d'une pâte plastique dont la teneur en eau a été ramenée entre 16 et 20%.

La troisième étape c) est une étape de fourniture d'une poudre d'émail.

La poudre d'émail fournie lors de l'étape c) présente une composition minéralogique riche en cordiérite, corindon, quartz et mullite, voisine de la composition minéralogique de l'âme céramique de l'article obtenu lors de l'étape g) décrite ci-après. La poudre d'émail peut ainsi présenter un pourcentage de cordiérite compris entre environ 40 et 60 % et un pourcentage de corindon compris entre environ 8 et 15%.

Une poudre d'émail particulièrement bien adaptée pour la mise en oeuvre du procédé est constituée de la poudre d'émail fournie par l'entreprise Imerys sous la référence « ER 318 B ». Pour la suite de la description, et notamment des caractéristiques de l'article, la poudre d'émail est constituée de cette poudre d'émail « ER 318 B ».

La quatrième étape d) est une étape de préparation d'une barbotine d'émail en délayant la poudre d'émail dans une suspension aqueuse contenant ou non des adjuvants de collage qui permettent de favoriser l'accrochage de la barbotine d'émail sur la pâte céramique.

Cette étape d) est réalisée par délayage de la poudre d'émail dans la suspension aqueuse jusqu'à l'obtention d'une barbotine dont la densité est comprise entre 1,300 et 1,700.

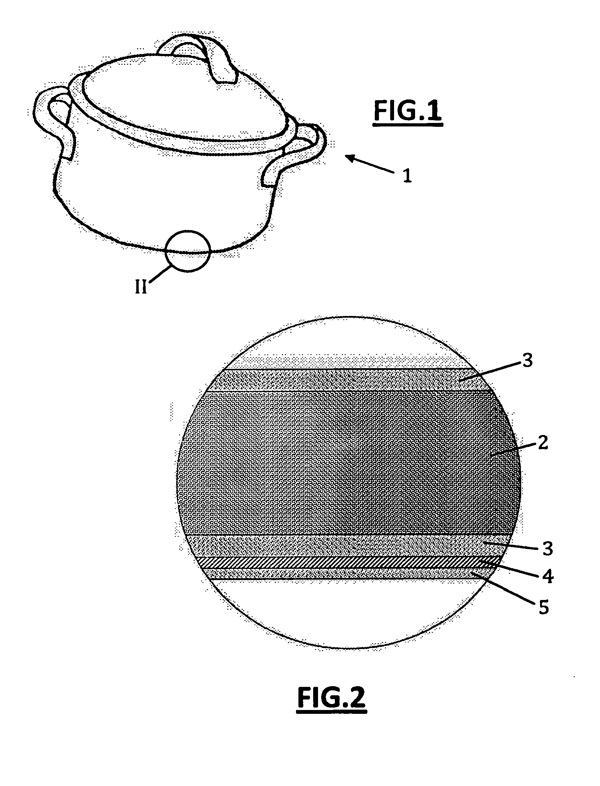

La cinquième étape e) est une étape de façonnage de la barbotine de céramique pour obtenir une pièce céramique de forme appropriée, par exemple une forme de cocotte ronde (comme illustré à titre d'exemple sur la figure 1), de cocotte ovale ou de tajine.

Cette étape e) de façonnage peut être réalisée au moyen des techniques classiques, telles que le coulage, le calibrage, l'estampage, le coulage sous pression, ou le pressage isostatique de la barbotine de céramique ou de la poudre atomisée.

La sixième étape f) est une étape d'émaillage de la pièce céramique consistant à recouvrir ladite pièce céramique d'une couche de barbotine d'émail.

Cette étape f) d'émaillage peut être réalisée au moyen des techniques classiques, telles que la pulvérisation de la barbotine d'émail ou le trempage dans la barbotine d'émail.

La septième étape g) est une étape de cuisson de la pièce céramique émaillée selon un programme de température comprenant les intervalles successifs suivants:
- intervalle de température comprise entre 300 °C et 600 °C pendant une durée comprise entre 1 et 2 heures;
- intervalle de température comprise entre 900 °C et 1300 °C pendant une durée comprise entre 3 et 5 heures;
- intervalle de température comprise entre 1300 °C et 1360 °C pendant une durée comprise entre 1 et 2 heures;
- intervalle de température comprise entre 1360 °C et 1450 °C pendant une durée comprise entre 2 et 6 heures;
- intervalle de température comprise entre 1200 °C et 1360 °C pendant une durée comprise entre 5 heures et 7 heures ;
- intervalle de température comprise entre 300 °C et 600 °C pendant une durée comprise entre 5 et 7 heures;
- intervalle de température comprise entre 20 °C et 50 °C pendant une durée comprise entre 1 heure et 2 heures.

Un exemple de programme de température particulièrement satisfaisant est le suivant:
- palier de température à environ 300 °C pendant une durée de 30 minutes ;
- palier de température à environ 600 °C pendant une durée de 30 minutes ;
- palier de température à environ 1000 °C pendant une durée de 110 minutes;
- palier de température à environ 1100 °C pendant une durée de 60 minutes ;
- palier de température à environ 1230 °C pendant une durée de 70 minutes ;
- palier de température à environ 1320 °C pendant une durée de 90 minutes ;
- palier de température à environ 1370 °C pendant une durée de 60 minutes ;
- palier de température à environ 1395 °C pendant une durée de 60 minutes ;
- palier de température à environ 1350 °C pendant une durée de 10 minutes ;
- palier de température à environ 1280 °C pendant une durée de 360 minutes;
- palier de température à environ 300 °C pendant une durée de 350 minutes ; et enfin
- palier de température à environ 30 °C pendant une durée de 70 minutes.

Cette cuisson peut s'effectuer sous une atmosphère oxydante pour favoriser la blancheur de l'article, ou bien réductrice.

Après cette cuisson, on obtient un article 1 comportant une âme céramique 2, issue de la cuisson de la pâte céramique, recouvert d'une couche d'émail 3 issue de la cuisson de la couche d'émail.

L'âme céramique 2 présente une composition minéralogique riche en cordiérite, corindon, quartz, phase vitreuse et mullite, avec un pourcentage de cordiérite compris entre environ 40 et 60 % et un pourcentage de corindon compris entre environ 8 et 15%.

L'article 1 présente les caractéristiques intrinsèques suivantes:
- coefficient de dilatation thermique compris entre environ 28 et 34 ppm/°C, de préférence de l'ordre de 31 ppm/°C;
- coefficient d'absorption d'eau en volume inférieur à 0,5 %, et de préférence inférieur à environ 0,2 %; et
- densité apparente supérieure à 2,0, voire supérieure à 2,4.

En outre, la couche d'émail après cuisson présente une composition minéralogique voisine de celle de l'âme céramique, riche en cordiérite et corindon, et présente en conséquence un coefficient de dilatation thermique proche voire équivalent à celui de la pâte céramique cuite.

La huitième étape h) est une étape de dépôt sur le fond de l'article d'une couche conductrice d'électricité apte à générer des courants de Foucault, et dont l'épaisseur est comprise entre 10 et 25 micromètres.

Cette étape h) de dépôt s'effectue selon une technique de dépôt par décalcomanie de la couche conductrice d'électricité, en utilisant un chromo comportant:
- une pellicule métallique 4 à base d'argent, cette pellicule métallique constituant la couche conductrice d'électricité; et
- une surcouche d'émail 5 fusible conçue pour protéger la pellicule métallique contre les rayures, lavages et autres agressions physiques et thermiques, cette surcouche d'émail 5 fusible étant ainsi directement intégrée dans le chromo.

Le dépôt du chromo s'effectue selon les techniques classiques, avec l'application du chromo sur le fond de l'article, sous une pression contrôlée, puis le séchage lent et complet pour ne pas altérer la pellicule métallique.

La neuvième et dernière étape i) est une étape de cuisson de l'article 1 à une température de cuisson comprise entre 800 °C et 900 °C, de préférence 850 °C, pendant une durée comprise entre 2 heures et 4 heures, de préférence égale à 3 heures.

Le but de cette étape i) est de cuire le chromo et la surcouche d'émail qui, une fois cuite, viendra protéger efficacement la pellicule métallique.

La figure 2 illustre les différentes couches constitutives de l'article 1, dans le fond, avec:
- l'âme céramique 2, issue de la cuisson de la pâte céramique ;
- la couche d'émail 3 de part et d'autre de la pâte céramique ;
- la couche conductrice 4 (ou pellicule métallique) disposée sur la face externe de l'article, contre la couche d'émail 3; et
- la surcouche d'émail 5 disposée sur la couche conductrice 4.

Les caractéristiques suivantes ont été observées et mesurées sur des articles 1 obtenus par ce procédé, après les étapes a) à i):
- une composition minéralogique: cordiérite à hauteur de 50 % environ, corindon à hauteur de 11 % environ, quartz, phase vitreuse, mullite;
- l'âme céramique 2 forme un matériau blanc, vitrifié, dense et translucide, et la couche d'émail est plus jaune, ce qui donne un article globalement blanc avec une nuance ivoire ou crème satinée;
- une résistance au choc mécanique de l'ordre de 1470 mJ (pour millijoules), sensiblement deux fois supérieure à une porcelaine classique, cette donnée ayant été mesurée lors de tests réalisés avec un percuteur de masse 0,5 Kg qui tombe sur l'article de différentes hauteurs ;
- un coefficient de dilatation thermique de l'ordre de 31 ppm/°C;
- un coefficient d'absorption d'eau en volume inférieur 0,2 %, voire de l'ordre de 0 %, ce qui en fait un produit non poreux dans la masse avec émail;
- aspect lisse de l'émail facilitant le nettoyage;
- faible sensibilité de l'émail à la rayure, aucune marque n'ayant été observée lors de tests de marquage ou de « metal marking » avec un couteau de dureté 200 HV et avec un couteau trempé de dureté 800 HV;
- une excellente résistance en lave-vaisselle, aucune dégradation n'ayant été observée lors de tests en lave-vaisselle avec une immersion à 75 °C pendant environ 16 heures dans une solution ayant un taux de détergent de 2 %;
- une densité apparente de l'ordre de 2,44;
- une excellente résistance au chauffage par micro-ondes, aucune fissuration ni tressaillage ni écaillage ni changement de couleur n'ayant été observés lors de test dans un four à micro-ondes durant environ 1 h sous une puissance du four de l'ordre de 620 à 700 Watts;
- un émail en accord thermique avec l'âme céramique qui permet d'éviter les microfissurations, évitant ainsi avec la faible porosité observée, une rétention par l'article des liquides alimentaires et de nettoyage.

Bien entendu l'exemple de mise en oeuvre évoqué ci-dessus ne présente aucun caractère limitatif et d'autres améliorations et détails peuvent être apportés au procédé selon l'invention, sans pour autant sortir du cadre de l'invention où d'autres choix de pâte céramique et/ou d'émail et/ou de couche conductrice peuvent par exemple être effectués.

## Revendications

1. Procédé de fabrication d'un article (1) de cuisson alimentaire en céramique adapté pour supporter plusieurs sources de chaleur distinctes, comprenant les étapes successives suivantes :
a) fourniture d'une pâte céramique comportant du quartz dans un pourcentage compris entre 10 et 25 %, du kaolin dans un pourcentage compris entre 25 et 50 %, du carbonate de magnésium dans un pourcentage compris entre 10 et 25 % et de l'oxyde d'aluminium dans un pourcentage compris entre 10 et 25 % ;
b) préparation d'une barbotine de céramique en délayant la pâte céramique dans une suspension aqueuse ;
c) fourniture d'une poudre d'émail ;
d) préparation d'une barbotine d'émail en délayant la poudre d'émail dans une suspension aqueuse ;
e) façonnage de la barbotine de céramique pour obtenir une pièce céramique de forme appropriée ;
f) émaillage de la pièce céramique consistant à recouvrir ladite pièce céramique d'une couche de barbotine d'émail ;
g) cuisson de la pièce céramique émaillée à une température de cuisson comprise entre 1360 °C et 1450 °C, de préférence entre 1385 °C et 1430 °C, pendant une durée comprise entre 2 et 6 heures, de préférence entre 4 et 5 heures, afin d'obtenir un article (1) comportant une âme céramique (2) recouvert d'une couche d'émail (3), ladite âme céramique (2) présentant une composition minéralogique riche en cordiérite, corindon, quartz, phase vitreuse et mullite, avec un pourcentage de cordiérite compris entre 40 et 60 % et un pourcentage de corindon compris entre 8 et 15%, et dans lequel ledit article (1) présente les caractéristiques intrinsèques suivantes :
- coefficient de dilatation thermique compris entre 28 et 34 ppm/°C, de préférence égal à 31 ppm/°C ;
- coefficient d'absorption d'eau en volume inférieur à 0,5 %, et de préférence inférieur à 0,2 % ; et
- densité apparente supérieure à 2,0, de préférence supérieure à 2,4.

2. Procédé selon la revendication 1, comprenant en outre, après l'étape g), une étape h) de dépôt sur le fond de l'article d'une couche conductrice (4) d'électricité apte à générer des courants de Foucault, et dont l'épaisseur est de préférence comprise entre 10 et 25 micromètres.

3. Procédé selon la revendication 2, dans lequel l'étape h) de dépôt d'une couche conductrice d'électricité s'effectue par un procédé de dépôt par décalcomanie de ladite couche conductrice d'électricité, au moyen d'un chromo comportant une pellicule métallique (4), notamment à base d'argent.

4. Procédé selon la revendication 3, dans lequel le chromo employé lors de l'étape h) comporte une surcouche d'émail (5) fusible destinée à protéger ladite pellicule métallique, et dans lequel le procédé comprend en outre, après l'étape h), une étape i) de cuisson de l'article à une température de cuisson comprise entre 800 °C et 900 °C, de préférence 850 °C, pendant une durée comprise entre 2 heures et 5 heures, de préférence égale à 3 heures.

5. Procédé selon l'une quelconque des revendications précédentes, dans lequel l'étape f) d'émaillage est réalisée par un procédé de pulvérisation de la barbotine d'émail ou par un procédé de trempage dans la barbotine d'émail.

6. Procédé selon l'une quelconque des revendications précédentes, dans lequel l'étape c) consiste à fournir une poudre d'émail présentant une composition minéralogique riche en cordiérite, corindon, quartz et mullite, voisine de la composition minéralogique de l'âme céramique de l'article obtenu lors de l'étape g).

7. Procédé selon l'une quelconque des revendications précédentes, dans lequel l'étape g) de cuisson de la pièce céramique émaillée s'effectue sous une atmosphère oxydante ou réductrice.

8. Procédé selon l'une quelconque des revendications précédentes, dans lequel l'étape g) de cuisson de la pièce céramique émaillée s'effectue selon un programme de température qui comporte les intervalles successifs suivants :
- intervalle de température comprise entre 300 °C et 600 °C pendant une durée comprise entre 1 et 2 heures ;
- intervalle de température comprise entre 900 °C et 1300 °C pendant une durée comprise entre 3 et 5 heures ;
- intervalle de température comprise entre 1300 °C et 1360 °C pendant une durée comprise entre 1 et 2 heures ;
- intervalle de température comprise entre 1360 °C et 1450 °C pendant une durée comprise entre 2 et 6 heures ;
- intervalle de température comprise entre 1200 °C et 1360 °C pendant une durée comprise entre 5 heures et 7 heures ;
- intervalle de température comprise entre 300 °C et 600 °C pendant une durée comprise entre 5 et 7 heures ;
- intervalle de température comprise entre 20 °C et 50 °C pendant une durée comprise entre 1 heure et 2 heures.

9. Article (1) de cuisson alimentaire en céramique obtenu par le procédé de fabrication conforme à l'une quelconque des revendications précédentes, dans lequel l'article comporte une âme céramique (2) recouverte d'une couche d'émail (3), ladite âme céramique (2) présentant une composition minéralogique riche en cordiérite, corindon, quartz, phase vitreuse et mullite, avec un pourcentage de cordiérite compris entre 40 et 60 % et un pourcentage de corindon compris entre 8 et 15%, et dans lequel ledit article (1) présente les caractéristiques intrinsèques suivantes :
- coefficient de dilatation thermique compris entre 28 et 34 ppm/°C, de préférence égal à 31 ppm/°C ;
- coefficient d'absorption d'eau en volume inférieur à 0,5 %, et de préférence inférieur à 0,2 % ; et
- densité apparente supérieure à 2,0, de préférence supérieure à 2,4.

10. Article selon la revendication 9, dans lequel la couche d'émail (3) présente un coefficient de dilatation thermique compris entre 28 et 34 ppm/°C, de préférence égal à 31 ppm/°C.

11. Article selon les revendications 9 ou 10, comportant sur le fond de l'article une couche conductrice (4) d'électricité apte à générer des courants de Foucault, et dont l'épaisseur est de préférence comprise entre 10 et 25 micromètres.

## Claims

1. A method for manufacturing a ceramic food-cooking item (1) adapted to bear several separate heat sources, comprising the following successive steps:
a) providing a ceramic paste including between 10 and 25% of quartz, between 25 and 50% of kaolin, between 10 and 25% of magnesium carbonate, and between 10 and 25% of aluminum oxide;
b) preparing a ceramic slurry by dispersing the ceramic paste in an aqueous suspension;
c) providing an enamel powder;
d) preparing an enamel slurry by dispersing the enamel powder in an aqueous suspension;
e) shaping the ceramic slurry to obtain a ceramic piece of suitable shape;
f) enameling the ceramic piece, which consists of covering said ceramic piece with a layer of enamel slurry;
g) firing the enameled ceramic piece at a firing temperature comprised between 1360°C and 1450°C, preferably between 1385°C and 1430°C, for a length of time comprised between 2 and 6 hours, so as to obtain an item (1) having a ceramic core (2) covered with a layer of enamel (3), said ceramic core (2) having a mineralogical composition rich in cordierite, corundum, quartz, vitreous phase and mullite, with between 40 and 60% of cordierite and between 8 and 15% of corundum, and wherein said item (1) has the following intrinsic characteristics:
- heat expansion coefficient comprised between 28 and 34 ppm/°C, preferably equal to 31 ppm/°C;
- volume water absorption coefficient below 0.5%, preferably below 0.2%; and
- apparent density above 2.0, preferably above 2.4.

2. The method according to claim 1, also comprising, after step g), a step h) for depositing, on the bottom of the item, an electrically conducting layer (4) capable of generating Foucault currents, and the thickness of which is preferably comprised between 10 and 25 micrometers.

3. The method according to claim 2, wherein step h) for depositing an electrically conducting layer is carried out through a decalcomania deposition method for depositing said electrically conducting layer, using a chromo including a metal film (4), in particular silver-based.

4. The method according to claim 3, wherein the chromo used during step h) includes a fusible enamel topcoat (5) designed to protect said metal film, and wherein the method also comprises, after step h), a step i) for firing the item at a firing temperature comprised between 800°C and 900°C, preferably 850°C, for a length of time comprised between 2 hours and 5 hours, preferably equal to 3 hours.

5. The method according to any one of the preceding claims, wherein the enameling step f) is carried out through a method for spraying the enamel slurry or a method for soaking in the enamel slurry.

6. The method according to any one of the preceding claims, wherein step c) consists of providing an enamel powder having a mineralogical composition rich in cordierite, corundum, quartz and mullite, close to the mineralogical composition of the ceramic core of the item obtained in step g).

7. The method according to any one of the preceding claims, wherein step g) for firing the enameled ceramic item is carried out under an oxidizing or reducing atmosphere.

8. The method according to any one of the preceding claims, wherein step g) for firing the enameled ceramic item is carried out according to a temperature program that includes the following successive intervals:
- temperature interval comprised between 300°C and 600°C for a length of time comprised between 1 and 2 hours;
- temperature interval comprised between 900°C and 1300°C for length of time comprised between 3 and 5 hours;
- temperature interval comprised between 1300°C and 1360°C for a length of time comprised between 1 and 2 hours;
- temperature interval comprised between 1360°C and 1450°C for a length of time comprised between 2 and 6 hours;
- temperature interval comprised between 1200°C and 1360°C for a length of time comprised between 5 and 7 hours;
- temperature interval comprised between 300°C and 600°C for a length of time comprised between 5 and 7 hours;
- temperature interval comprised between 20°C and 50°C for a length of time comprised between 1 and 2 hours.

9. A ceramic food-cooking item (1) obtained using the manufacturing method according to any one of the preceding claims, wherein the article includes a ceramic core (2) covered with an enamel layer (3), said ceramic core (2) having a mineralogical composition rich in cordierite, corundum, quartz, vitreous phase and mullite, with between 40 and 60% of cordierite and between 8 and 15% of corundum, and wherein said item (1) has the following intrinsic characteristics:
- heat expansion coefficient comprised between 28 and 34 ppm/°C, preferably equal to 31 ppm/°C;
- volume water absorption coefficient below 0.5%, preferably below 0.2%; and
- apparent density above 2.0, preferably above 2.4.

10. The item according to claim 9, wherein the layer of enamel (3) has a heat expansion coefficient comprised between 28 and 34 ppm/°C, preferably equal to 31 ppm/°C.

11. The item according to claims 9 or 10, including, on the bottom of the item, an electrically conductive layer (4) capable of generating Foucault currents, and the thickness of which is preferably comprised between 10 and 25 micrometers.

## Patentansprüche

1. Verfahren zur Herstellung eines Kochgeräts (1) aus Keramik, das für mehrere unterschiedliche Wärmequellen geeignet ist, das die folgenden aufeinanderfolgenden Schritte umfasst:
a) Bereitstellen einer keramischen Masse, die Quarz in einem Prozentsatz zwischen zirka 10 und 25 % inklusive, Kaolin in einem Prozentsatz zwischen zirka 25 und 50 % inklusive, Magnesiumkarbonat in einem Prozentsatz zwischen zirka 10 und 25 % und Aluminiumoxid in einem Prozentsatz zwischen zirka 10 und 25 % aufweist,
b) Herstellen einer Keramikschlämme durch Verdünnen der keramischen Masse in einer wässrigen Lösung,
c) Bereitstellen eines Glasurpulvers,
d) Herstellen einer Glasurschlämme durch Verdünnen des Glasurpulvers in einer wässrigen Lösung,
e) Gestalten der Keramikschlämme, um ein Keramikteil geeigneter Form zu erhalten,
f) Glasieren des keramischen Teils, was darin besteht, das keramische Teil mit einer Glasurschlämmeschicht zu bedecken,
g) Brennen des glasierten keramischen Teils bei einer Brenntemperatur zwischen 1360 °C und 1450 °C, vorzugsweise zwischen zirka 1385 °C und 1430 °C, inklusive während einer Dauer zwischen zirka 2 und 6 Stunden, vorzugsweise in der Größenordnung von 4 bis 5 Stunden, inklusive, um ein Gerät (1) zu erhalten, das einen keramischen Kern (2) aufweist, der mit einer Glasurschicht (3) bedeckt ist, wobei der keramische Kern (2) eine mineralogische Zusammensetzung reich an Cordierit, Korund, Quarz, Glasphase und Mullit aufweist mit einem Cordieritprozentsatz zwischen zirka 40 und 60 % inklusive und einem Korundprozentsatz zwischen zirka 8 und 15 % inklusive und wobei das Gerät (1) die folgenden immanenten Merkmale aufweist:
- Wärmeausdehnungskoeffizient zwischen zirka 28 und 34 ppm/°C inklusive, vorzugsweise von gleich 31 ppm/°C,
- Wasserabsorptionskoeffizient unter 0,5 Vol.-% und vorzugsweise unter zirka 0,2 % und
- Scheindichte über 2,0, vorzugsweise über 2,4.

2. Verfahren nach Anspruch 1, das ferner, nach dem Schritt g), einen Schritt h) des Aufbringens auf den Boden des Geräts einer stromleitenden Schicht (4) umfasst, die imstande ist, Foucaultsche Ströme zu erzeugen und deren Dicke vorzugsweise zwischen 10 und 25 Mikrometer inklusive ist.

3. Verfahren nach Anspruch 2, wobei der Schritt h) des Aufbringens einer stromleitenden Schicht durch ein Aufbringverfahren durch Abklatschen der stromleitenden Schicht mittels eines Abdrucks erfolgt, der eine Metallfolie (4) aufweist, insbesondere auf der Basis von Silber.

4. Verfahren nach Anspruch 3, wobei der beim Schritt h) verwendete Abdruck eine schmelzbare Glasurüberschicht (5) aufweist, die dazu bestimmt ist, die Metallfolie zu schützen, und wobei das Verfahren ferner, nach dem Schritt h), einen Schritt i) des Brennens des Geräts bei einer Brenntemperatur zwischen 800 °C und 900 °C inklusive, vorzugsweise von 850 °C, während einer Dauer zwischen 2 Stunden und 5 Stunden inklusive, vorzugsweise von gleich 3 Stunden, umfasst.

5. Verfahren nach einem der vorangehenden Ansprüche, wobei der Glasurschritt f) durch ein Sprühverfahren der Glasurschlämme oder durch ein Tauchverfahren in die Glasurschlämme durchgeführt wird.

6. Verfahren nach einem der vorangehenden Ansprüche, wobei der Schritt c) darin besteht, ein Glasurpulver bereitzustellen, das eine mineralogische Zusammensetzung reich an Cordierit, Korund, Quarz und Mullit aufweist, ähnlich wie die mineralogische Zusammensetzung des keramischen Kerns des Geräts, das bei Schritt g) erzeugt wird.

7. Verfahren nach einem der vorangehenden Ansprüche, wobei der Brennschritt g) des glasierten keramischen Teils in einer oxidierenden oder reduzierenden Atmosphäre durchgeführt wird.

8. Verfahren nach einem der vorangehenden Ansprüche, wobei der Brennschritt g) des glasierten keramischen Teils gemäß einem Temperaturprogramm durchgeführt wird, das die folgenden aufeinanderfolgenden Intervalle aufweist:
- Temperaturintervall zwischen 300 °C und 600 °C inklusive während einer Dauer zwischen 1 und 2 Stunden inklusive,
- Temperaturintervall zwischen 900 °C und 1300 °C inklusive während einer Dauer zwischen 3 und 5 Stunden inklusive,
- Temperaturintervall zwischen 1300 °C und 1360 °C inklusive während einer Dauer zwischen 1 und 2 Stunden inklusive,
- Temperaturintervall zwischen 1360 °C und 1450 °C inklusive während einer Dauer zwischen 2 und 6 Stunden inklusive,
- Temperaturintervall zwischen 1200 °C und 1360 °C inklusive während einer Dauer zwischen 5 und 7 Stunden inklusive,
- Temperaturintervall zwischen 300 °C und 600 °C inklusive während einer Dauer zwischen 5 und 7 Stunden inklusive,
- Temperaturintervall zwischen 20 °C und 50 °C inklusive während einer Dauer zwischen 1 und 2 Stunden inklusive.

9. Kochgerät (1) aus Keramik, das gemäß dem Herstellungsverfahren nach einem der vorangehenden Ansprüche hergestellt wird, wobei das Gerät einen keramischen Kern (2) aufweist, der mit einer Glasurschicht (3) bedeckt ist, wobei der keramische Kern (2) eine mineralogische Zusammensetzung reich an Cordierit, Korund, Quarz, Glasphase und Mullit aufweist mit einem Cordieritprozentsatz zwischen 40 und 60 % inklusive und einem Korundprozentsatz zwischen 8 und 15 % inklusive und wobei das Gerät (1) die folgenden immanenten Merkmale aufweist:
- Wärmeausdehnungskoeffizient zwischen 28 und 34 ppm/°C inklusive, vorzugsweise von gleich 31 ppm/°C,
- Wasserabsorptionskoeffizient unter 0,5 Vol-% und vorzugsweise unter 0,2 % und
- Scheindichte über 2,0, vorzugsweise über 2,4.

10. Gerät nach Anspruch 9, wobei die Glasurschicht (3) einen Wärmeausdehnungskoeffizienten zwischen 28 und 34 ppm/°C inklusive, vorzugsweise von gleich 31 ppm/°C, aufweist.

11. Gerät nach einem der Ansprüche 9 oder 10, das auf dem Boden des Geräts eine stromleitende Schicht (4) aufweist, die imstande ist, Foucaultsche Ströme zu erzeugen und deren Dicke vorzugsweise zwischen 10 und 25 Mikrometer inklusive ist.
